# EUROPÄISCHE PATENTSCHRIFT

(11) **EP 0 895 918 B1**
(45) Veröffentlichungstag und Bekanntmachung des Hinweises auf die Patenterteilung: **12.11.2003**
(21) Anmeldenummer: 98111518.1
(22) Anmeldetag: 23.06.1998
(51) Int. Cl.: B60T 17/08, B60T 11/236

(54) **Kolben für Arbeitszylinder, insbesondere für Bremszylinder von Fahrzeugen**
Piston for power cylinder, especially for vehicle brake cylinder
Piston pour verin de travail, notamment pour cylindre de frein d'un véhicule

(30) Priorität: 08.08.1997 DE 19734291
(43) Veröffentlichungstag der Anmeldung: 10.02.1999
(73) Patentinhaber: KNORR-BREMSE Systeme für Nutzfahrzeuge GmbH, 80809 München (DE)
(72) Erfinder: Siebke, Alf, 80333 München (DE); Maillé, Thierry, 14130 Coquainvilliers (FR)

(56) Entgegenhaltungen:
- EP-A- 0 358 210
- DE-A- 3 125 461

## Beschreibung

Die Erfindung betrifft einen Kolben nach dem Gattungsbegriff des Patentanspruches 1.

Zur Abdichtung von Arbeitskolben in pneumatisch betätigten Brems- oder Betätigungszylindern werden üblicherweise Elastomer-Dichtelemente verwendet. Bei gleitender Abdichtung sind Standardbauformen wie Nutring, Kolbenstulp oder O-Ring vorgesehen. Insbesondere bei Kolbenstulpausführungen, deren Konstruktion aus der DE 31 25 461 C2 bekannt ist und eine Montage auf einem Haltebund des Kolbens vorsieht, besteht die Gefahr einer Fehlmontage, derart, daß das Dichtelement im Laufe der Montage ganz oder teilweise neben den Haltebund gesetzt wird. Ebenso kann es vorkommen, daß beim Fügevorgang d. h. beim Einschieben des Kolbens in den Zylinderkörper, das Dichtelement verschoben wird. Fehllagen der geschilderten Art sind vor allem dann kritisch für die Gerätefunktion, insbesondere auch bei Bremszylindern, wenn die fehlerhafte Positionierung des Kolbenstulpes auf der dem Druckraum zugewandten Seite des Haltebundes erfolgt. Während in diesem Fall die Dichtlippen des Kolbenstulpes in Funktion bleiben, kann dieser sich mit seiner Rückseite gegen den Haltebund abstützen, wenn das Betriebsmedium mit Druck beaufschlagt wird. Trotz einer Fehllage gegenüber dem Haltebund am Außenumfang des Kolbens wird bei einer folgenden Dichtheitsprüfung die fehlerhafte Position des Dichtelementes nicht erkannt. Im Betriebseinsatz kann ein derartiger Fehler zur Zerstörung der Dichtung oder zur Extrusion der Dichtung über den Haltebund in den Sekundärraum des Zylinders führen. Beide Fälle müssen ausgeschlossen werden, indem durch Absicherung der Montage oder anschließende Prüfung der einwandfreie Sitz des Dichtelementes gewährleistet ist.

Bei Dichtelementen der in Rede stehenden Art wird deren Positionsabsicherung bei insbesondere aus der DE 44 24 721 A1 bekannten Ausführungen im allgemeinen so vorgenommen, daß sich druckseitig vor dem Haltebund des Kolbenstulpes eine zweite, umlaufende Schulter befindet; hinter dieser Schulter kommt die statische Dichtlippe zu liegen, wenn die Montage einwandfrei erfolgt ist. Die Dichtlippe befindet sich jeweils zwischen der Sicherungsschulter und dem Haltebund. Die Funktion dieser Sicherungsschulter besteht darin, daß bei einer Fehlmontage des Kolbenstulpes dessen statische Dichtlippe ganz oder teilweise auf der Sicherungsschulter aufliegt d.h. die Dichtlippe nimmt nicht den gesamten Zwischenraum zwischen Haltebund und Sicherungsschulter ein. Bei einer anschließenden Druckbeaufschlagung wird, da die Funktion der statischen Dichtlippe aufgehoben ist, eine Undichtigkeit festgestellt, die zur Erkennung des Montagefehlers führt. Die provozierte Leckage vermittelt demnach den Rückschluß auf die fehlerhafte Montage.

Das beschriebene Prinzip unter Verwendung einer parallel zum Haltebund sich erstreckenden Sicherungsschulter ist nachteilig in Bezug auf den Fertigungsaufwand des Kolbens. Dieser wird häufig als Gußteil ausgeführt, insbesondere bei Bremszylindern, welche in großen Stückzahlen gefertigt werden. Um den zwischen Haltebund und Sicherungsschulter konstruktiv bedingt entstehenden Hinterschnitt fertigungstechnisch exakt realisieren zu können, sind radial geteilte Gußformen bzw. radiale Schieber erforderlich. Eine vollständige Bearbeitung des Hinterschnittes aus dem Gußstück heraus wäre aufwendig und vor allem kritisch bezüglich der Freilegung von Porösitäten in tieferen Bearbeitungszonen. Der dem gegenüber gewählte Einsatz radial geteilter Werkzeuge erweist sich jedoch im gleichen Maße als sehr kostenaufwendig; radial geteilte Werkzeuge sind kostenaufwendiger als nur axial geteilte. Es steht bei radialer Teilung in der Werkzeughälften-Trennfuge immer ein Gußgrat, der die Bearbeitung des Gußstückes im Sitzbereich des Dichtelementes notwenig macht, was erhöhten Kostenaufwand bedeutet.

Aus der DE 38 30 711 A1 ist ein Dichtring, insbesondere Radialwellendichtring mit einem radial innen, elastisch verformbaren Dichtabschnitt bekannt, der etwa axial von einem Boden des Dichtringes absteht und an seinem Innenmantel mindestens eine Dichtlippe hat, wobei am Dichtabschnitt mindestens ein Durchgang vorgesehen ist. Dieser Dichtring erzeugt zwar bei einer Fehlmontage eine provozierte Leckage, eine Einrichtung zur Anzeige einer Fehlmontage des Dichtelements am Kolben ist jedoch nicht vorgesehen.

Die DE-OS 21 62 541 offenbart eine hydraulische Betätigungsvorrichtung für eine Innenbackenbremse mit zwei relativ zueinander gleitend bewegbaren Gliedern, von denen das erste eine langgestreckte Sacklochbohrung aufweist, in der ein Abschnitt des zweiten Gliedes arbeitet und zwischen dem Grund der Sacklochbohrung und seinem Ende eine Flüssigkeitskammer einschließt, wobei eines der beiden Glieder eine Einlaßöffnung für die Kammer und eine Lecköffnung in einem Bandabschnitt aufweist, die ein Austreten von Öl zur Anzeige der Schadhaftigkeit einer die Kammer abdichtenden Dichtung bewirkt. Mit dieser Vorrichtung ist eine provozierte Prüfleckage bei Abnutzung von Dichtringen an Kolben von Bremszylindern möglich, doch ist eine Fehlmontage und Fehllage des Dichtelementes nicht erkennbar.

Davon ausgehend besteht die Aufgabe der Erfindung darin, einen Kolben der gattungsgemäßen Art in fertigungstechnisch einfacher und billiger Weise so auszubilden, daß durch eine provozierte Leckage, vorzugsweise durch eine provozierte Leckage der statischen Dichtlippe, die Fehlmontage und Fehllage des Dichtelementes erkennbar ist.

Zur Lösung dieser Aufgabe dienen die Merkmale nach dem Kennzeichnungsteil des Patentanspruches 1.

Die Einformung der taschenförmigen Vertiefungen bzw. Ausnehmungen am Umfang des Kolbens ermöglichen in fertigungstechnisch einfacher und billiger Weise, daß Fehlmontagen des Kolbenstulpes, aber auch Fehlmontagen anderer Dichtelemente, durch provozierte Leckagen aufdeckbar sind. Der wesentliche Vorteil dieses Prinzipes besteht in der Möglichkeit, den Werzeugaufwand bei Gußteilkonstruktionen zu verringern und insbesondere einen Kolben ohne jede mechanische Bearbeitung darzustellen, ohne daß auf das beschriebene Sicherungsprinzip zu verzichten wäre.

Vorteilhafte Ausgestaltungen und Weiterbildungen sind in weiteren Patentansprüchen aufgeführt.

Die Erfindung ist nachfolgend anhand eines Ausführungsbeispieles unter Bezugnahme auf die beigefügte Zeichnung erläutert.
Figur 1 ist eine Schnittansicht eines Kolbens nach dem aus der DE 44 24 721 A1 bekannten Stand der Technik, in Einbaulage innerhalb eines kombinierten Betriebsbrems- und Federspeicherbremszylinders für Fahrzeuge;
Figur 2 ist eine vergrößerte Einzeldarstellung eines fehlmontierten, eine Leckage auslösenden Kolbenstulpes an einem Kolben gemäß dem Stand der Technik der bei der Anordnung nach Figur 1 verwendeten Art;
Figur 3 und 4 sind der Figur 2 vergleichbare Ansichten der Position eines Kolbenstulpes an einem Kolben gemäß dem aus der DE 31 25 461 C2 bekannten Stand der Technik, welcher ohne Sicherungsschulter versehen ist und demgemäß eine provozierte Leckage nicht zuläßt; und
Figur 5 ist eine Teilschnittansicht eines Kolbens gemäß der Erfindung, unter Darstellung der am Außenumfang des Kolbens befindlichen taschenförmigen Vertiefungen.

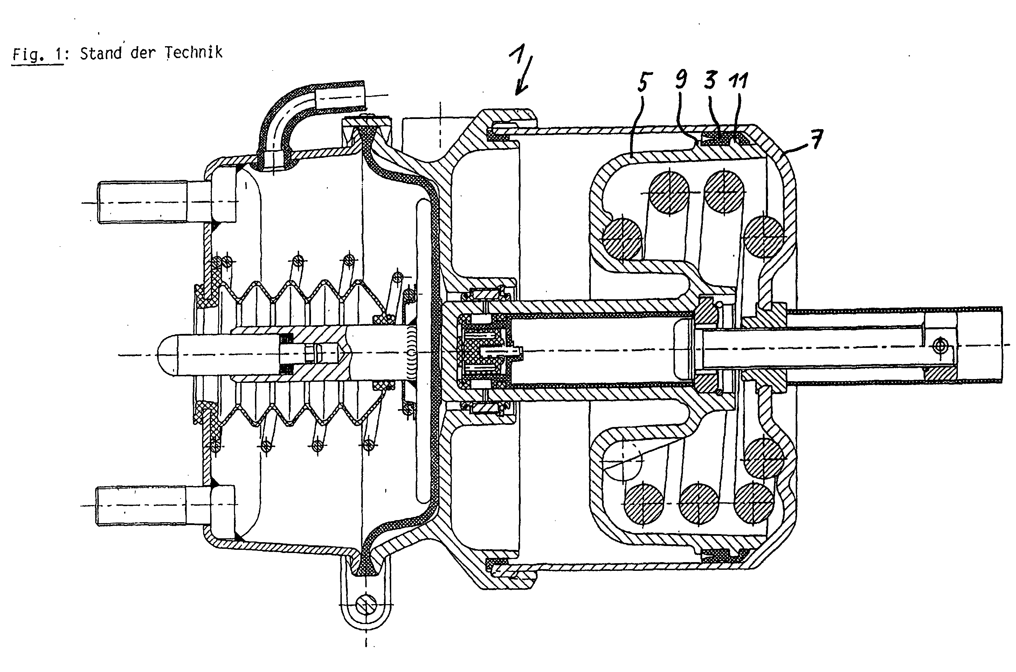

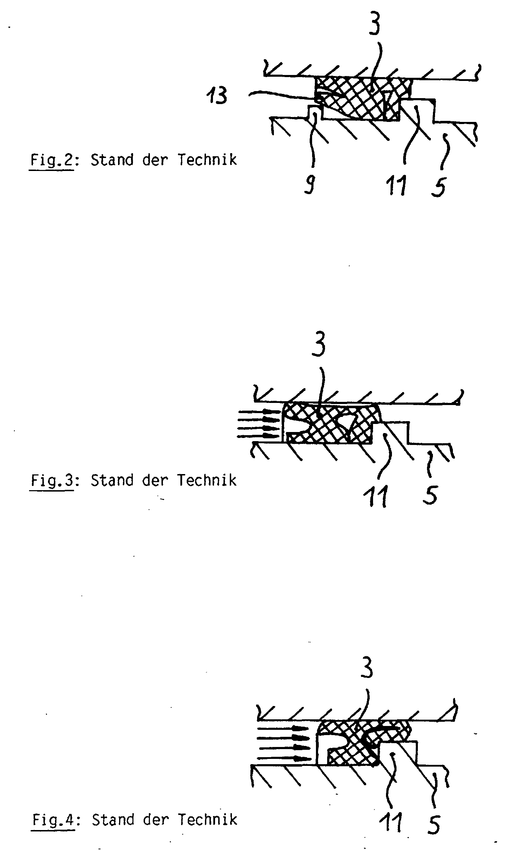

In Figur 1 der Zeichnung ist ein kombinierter Betriebsbrems- und Federspeicherbremszylinder - Kombizylinder 1 genannt - dargestellt, der hinsichtlich der Anordnung des Kolbenstulpes 3 am Kolben 5 des Federspeicherbremszylinders 7 einer herkömmlichen Konstruktion entspricht. Hierbei ist der Kolbenstulp zwischen einer Sicherungsschulter 9 und einem Haltebund 11 gefesselt. Die Funktion der Sicherungsschulter 9 ist aus Figur 2 der Zeichnung ersichtlich. Sie besteht darin, daß bei einer Fehlmontage des Kolbenstulpes 3 dessen statische Dichtlippe 13 ganz oder teilweise auf der Sicherungsschulter 9 aufliegt. Bei einer anschließenden Druckbeaufschlagung wird, da die Funktion der statischen Dichtlippe 13 aufgehoben ist, eine Undichte festgestellt, die zur Erkennung des Montagefehlers führt.

Die Figuren 3 und 4 geben die Position eines fehlerhaft montierten Kolbenstulpes gemäß einem weiteren Stand der Technik ohne Sicherungsschulter und bei Verquetschung gegenüber dem Haltebund 11 wieder. Die fehlerhafte Position des Kolbenstulpes 3 ist jedoch bei der Anordnung nach Figur 3 und 4 nicht feststellbar, da die beiden Dichtlippen des Kolbenstulpes gegenüber dem anstehenden Druck aus dem Druckraum dicht bleiben. Im Betriebseinsatz können derartige Montagefehler zu einer Zerstörung des Kolbenstulpes führen, was zu verhindern ist und zu der eine Sicherungsschulter aufweisenden Anordnung nach Figur 2 führte. Diese Anordnung ist jedoch aus fertigungstechnischen Gründen problematisch anzusehen, also insbesondere nachteilig in Bezug auf den Fertigungsaufwand, wie eingangs erläutert wurde.

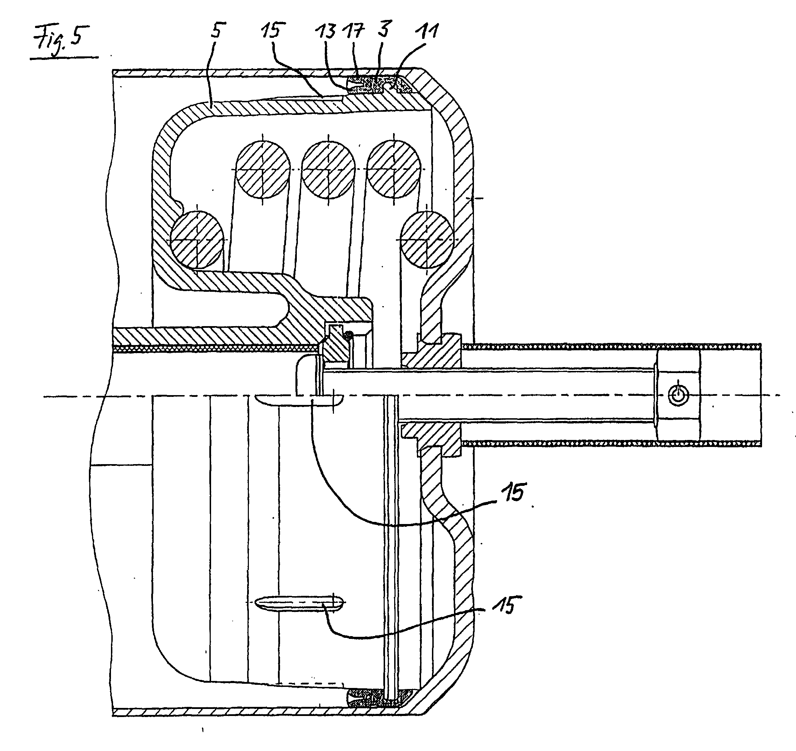

Demgegenüber wurde erfindungsgemäß mit der Anordnung nach Figur 5 die Möglichkeit geschaffen, eine Fehllage des Dichtelementes, im vorliegenden Beispiel das Kolbenstulpes 3, durch eine provozierte Leckage der statischen Dichtlippe 13 erkennbar zu machen, ohne daß erhöhter Fertigungsaufwand in Kauf zu nehmen ist. Es ist vorgesehen, die Zone einer möglichen Fehllage der statischen Dichtlippe auf dem Kolbenumfang so zu gestalten - und zwar ohne Sicherungsschulter - daß eine Unterbrechung der für Dichtheit erforderlichen Oberfläche entsteht. Dies geschieht vorzugsweise in der Form, daß die Unterbrechung direkt bei der Fertigung des Kolbens vorgenommen wird, so beispielsweise in Form schmaler Vertiefungen 15 (Figur 5), welche unter Winkelabstand zueinander auf der Oberfläche des Kolbens 5 ausgebildet sind, z. B. im Gußverfahren, und welche sich in Längsrichtung des Bereiches einer möglichen Fehllage der statischen Dichtlippe erstrecken. Sollte die statische Dichtlippe 13 infolge der in Figur 3 wiedergegebenen Fehllage axial nach links (gemäß Figur 5) versetzt sein, so verschwenkt sie infolge ihrer Verspannung in Richtung der Vertiefung 15 und taucht etwas in diese ein, derart, daß infolge der Abstandsvergrößerung eine provozierte Leckage am Kolbenstulp 3, gegebenenfalls an beiden Dichtlippen desselben, eintritt. Die Fehlmontage des Kolbenstulpes ist durch die genannte Dichtprobe somit in einfacher Weise feststellbar.

Anstelle der taschenförmigen Vertiefungen am Umfang des Kolbens 5, wie in Figur 5 dargestellt, können auch Ausnehmungen oder Vertiefungen anderer Konfiguration verwendet werden, in jedem Fall handelt es sich um eine direkte Formung am Bauteil Kolben. Die Formgebung der Vertiefungen hängt auch vom jeweils verwendeten Dichtelement ab d.h. die erfindungsgemäße Anordung des ist auch auf Dichtelemente anderer Konstruktion und Konfiguration anwendbar.

Zu der vorstehend beschriebenen Bauform des Erfindungsgegenstandes sind grundsätzlich Alternativen bzw. Erweiterungen möglich. Statt taschenförmiger Einsenkungen oder Vertiefungen kann an der Oberfläche des Kolbens eine rauhe Struktur, vergleichbar einer gerändelten Fläche, mit ausreichender Tiefe vorgesehen sein. Der erfindungsgemäße Gedanke ist auch anwendbar an Dichtelementen, deren Bauart sich gegen der von Kolbenstulpen unterscheidet, solange sie zur Abdichtung in einer Position einen Oberflächenkontakt mit geringer Rauhtiefe benötigen. Hierzu sind O-Ringe, Nutringe, Quadringe zu nennen. In gleicher Weise ist es möglich, das erfindungsgemäße Prinzip bei Kolbenstangen- bzw. Schaft-Dichtungen anzuwenden, deren statische Dichtlippe nach außen gerichtet ist; grundsätzlich ist das Prinzip bei ähnlichen Dichtungskonfigurationen verwendbar, z. B. bei pneumatischen Kolbenventilen, pneumatischen Kupplungskraftverstärkern ect., bei welchen provozierte Leckage gewünscht ist.

### Bezugszeichenliste

- 1: Kombizylinder
- 3: Kolbenstulp
- 5: Kolben
- 7: Federspeicherbremszylinder
- 9: Sicherungsschulter
- 11: Haltebund
- 13: statische Dichtlippe
- 15: Vertiefung
- 17: Dichtlippe

## Patentansprüche

1. Kolben für Arbeitszylinder, insbesondere für Bremszylinder von Fahrzeugen, mit einem am Außenumfang des Kolbens gehalterten Dichtelement, welches gegenüber den zwei vom Kolben voneinander getrennten Druck- bzw. Druckentlastungsräumen abdichtet, und mit einer Einrichtung zur Anzeige einer Fehlmontage des Dichtelementes mittels provozierter Leckage, **gekennzeichnet durch** folgende Merkmale:
am Außenumfang des Kolbens (5) ist in einem bei Fehlmontage des Dichtelementes von diesem belegten Bereich wenigstens eine ein Auslenken des Dichtelementes und hierdurch eine Prüf-Leckage provozierende Vertiefung (15) vorgesehen.

2. Kolben für Arbeitszylinder nach Anspruch 1, **gekennzeichnet durch** mehrere an seiner Oberfläche befindliche taschenförmige Vertiefungen(15), in welche das Dichtelement infolge der bei Fehlmontage verursachten Positionsverschiebung - eine provozierte Leckage verursachend - eintaucht.

3. Kolben für Arbeitszylinder nach Anspruch 1 oder 2, bei welchem das Dichtelement aus einem Kolbenstulp besteht, **gekennzeichnet durch** folgende Merkmale:
a) der Kolbenstulp (3) ist mittels eines an der Oberfläche des Kolbens (5) radial auskragenden Haltebundes (11) am Kolben gehaltert;
b) in Richtung des Druckraumes des den Kolben kragenden Arbeitszylinders ist an der Oberfläche des Kolbens wenigstens eine Vertiefung (15) ausgebildet; und
c) die Position der Vertiefung (15) gegenüber dem Kolbenstulp (3) ist so gewählt, daß bei gegenüber dem Haltebund (11) bestehender Fehllage des Kolbenstulpes und hierdurch verursachter Positionsverschiebung die am Kolbenstulp (3) ausgebildete statische Dichtlippe (13) in die Vertiefung (15) eintaucht, derart, daß zu Testzwecken eine provozierte Leckage entlag des Kolbenstulpes erzeugbar ist.

4. Kolben für Arbeitszylinder nach einem der vorangehenden Ansprüche, **dadurch gekennzeichnet, daß** mehrere unter Winkelabstand zueinander positionierte Vertiefungen (15) am Außenumfang des Kolbens (5) ausgebildet sind.

5. Kolben für Arbetiszylinder nach einer der vorangehenden Ansprüche, **dadurch gekennzeichnet, daß** die Vertiefung als eine an der Oberfläche des Kolbens ausgearbeitete Rauhstruktur ausreichender Tiefe besteht.

## Claims

1. Piston for power cylinders, specifically for brake cylinders in vehicles, comprising a sealing element supported on the external periphery of the piston for providing the sealing from the two pressure or decompression compartments separated by said piston from each other, and comprising a means for indicating the incorrect mounting of said sealing element by means of provoked leakage, **characterised by** the following features:
at least one recess (15) is provided on the external periphery of said piston (5) in a region occupied by the latter in the case of incorrect mounting of said sealing element, which recess provokes a deflection of said sealing element and consequently test leakage.

2. Piston for power cylinders according to Claim 1, **characterised by** a plurality of pocket-shaped recesses (15) located on its surface, into which said sealing element penetrates as a result of positional displacement caused by incorrect mounting, hence causing provoked leakage.

3. Piston for power cylinders according to Claim 1 or 2, wherein said sealing element consists of a piston packing, **characterised by** the following features:
(a) said piston packing (3) is supported by means of a retaining collar (11) on said piston, which projects in a radial direction on the surface of said piston (5);
(b) at least one recess (15) is formed on the surface of said piston along the extension of the power cylinder supporting the piston; and
(c) the position of said recess (15) relative to said piston packing (3) is so selected that in the case of occurrence of an incorrect position of said piston packing relative to said retaining collar (11) and a resulting positional displacement, the static sealing lip (13) formed on said piston packing (3) penetrates into said recess (15) in such a way that provoked leakage can be created along said piston packing for test purposes.

4. Piston for power cylinders according to any of the preceding Claims, **characterised in that** a plurality of recesses (15) is formed on the external periphery of said piston (5), which are positioned at angular distances from each other.

5. Piston for power cylinders according to any of the preceding Claims, **characterised in that** said recess is provided in the form of a rough surface structure of sufficient depth, which is machined on the surface of said piston.

## Revendications

1. Piston pour vérins de travail, notamment pour cylindres de frein de véhicules, comprenant un élément d'étanchéité fixé à la périphérie extérieure du piston afin d'assurer l'étanchéité relative aux deux espaces de compression et de décompression, qui sont séparées l'une de l'autre moyennant ledit piston, et comprenant un moyen à indiquer un montage incorrect dudit élément d'étanchéité par fuite provoquée, **caractérisé par** les caractéristiques suivantes:
au moins évidement (15) est formé à la périphérie extérieure dudit piston (5) dans une zone occupée par le dernier au cas d'un montage incorrect dudit élément d'étanchéité, cet évidement provoquant une déviation dudit élément d'étanchéité et en conséquence une fuite de test.

2. Piston pour vérins de travail selon la revendication 1, **caractérisé par** une pluralité d'évidements en poche (15) formés à sa surface, dans lesquels s'enfonce ledit élément d'étanchéité en conséquence d'un déplacement positionnel causé par un montage incorrect, en donnant ainsi lieu à une fuite provoquée.

3. Piston pour vérins de travail selon la revendication 1 ou 2, dans lequel ledit élément d'étanchéité consiste en un embouti de piston, **caractérisé par** les caractéristiques suivantes:
(a) ledit embouti de piston (3) est fixé moyennant un collet de retenue (11) audit piston, qui fait saillie, en sans radial, à la surface dudit piston (5);
(b) au moins un évidement (15) est formé à la surface dudit piston le long de l'étendue du cylindre de travail portant le piston ; et
(c) la position dudit évidement (15), relative audit embouti de piston (3), est choisie de telle manière. qu'au cas de l'occurrence d'une position incorrecte dudit embouti de piston, relative audit collet de retenue (11), et d'un déplacement positionnel en résultant, la lèvre d'étanchéité statique (13) formée audit embouti de piston (3) s'enfonce dans ledit évidement (15) d'une telle façon, qu'on puisse créer une fuite provoquée le long dudit embouti de piston aux fins de test.

4. Piston pour vérins de travail selon une quelconque des revendications précédentes, **caractérisé en ce qu'**une pluralité d'évidements (15) est formé à la périphérie extérieure dudit piston (5), qui sont positionnés aux écarts angulaires l'un de l'autre.

5. Piston pour vérins de travail selon une quelconque des revendications précédentes, **caractérisé en ce que** ledit évidement est configuré sous forme d'une structure de surface rugueuse à profondeur suffisante, qui est usinée à la surface dudit piston.
